# EUROPÄISCHE PATENTSCHRIFT

(11) **EP 2 428 271 B1**
(45) Veröffentlichungstag und Bekanntmachung des Hinweises auf die Patenterteilung: **21.06.2017**
(21) Anmeldenummer: 11005349.3
(22) Anmeldetag: 30.06.2011
(51) Int. Cl.: B01L 3/02, G01F 1/84

(54) **Pipette für ein Pipettensystem mit Pipette und Spritze**
Pipette for a pipette system with pipette and syringe
Pipette pour un système de pipetage avec pipette et seringue

(30) Priorität: 01.07.2010 DE 202010009747 U
(43) Veröffentlichungstag der Anmeldung: 14.03.2012
(73) Patentinhaber: BRAND GMBH + CO KG, 97877 Wertheim (DE)
(72) Erfinder: Rempt, Renate, 97877 Wertheim (DE); Böhm, Dieter, 97877 Wertheim (DE); Gehrig, Steffen, 74731 Walldürn (DE); Kneucker, Ottmar, 97264 Helmstadt (DE)
(74) Vertreter: Von Rohr Patentanwälte Partnerschaft mbB

(56) Entgegenhaltungen:
- EP-A1- 2 033 712
- DE-A1- 19 917 907
- DE-A1-102005 023 203
- DE-C2- 4 341 229

## Beschreibung

Die Erfindung betrifft eine Pipette für ein Pipettensystem mit Pipette und Spritze, nämlich eine Pipette mit den Merkmalen des Oberbegriffs von Anspruch 1.

Die bekannte Pipette, von der die Erfindung ausgeht (DE 199 17 947 A1), ist innerhalb eines Pipettensystems hinsichtlich der Handhabung deshalb besonders geeignet, weil die jeweils mit der Pipette zu handhabende, auswechselbare Spritze axial in die Pipette einschiebbar und aus dieser wieder entfernbar bzw. von dieser abwerfbar ist. Die jeweilige Spritze ist also in einer reinen Axialbewegung unmittelbar bis in die Greifpositionen von Flansch des Zylinders und Kolbenkopf des Kolbens in die Pipette einschiebbar. Die Fixierung in der Greifposition erfolgt durch radial zustellbare Zylindergreifhebel der Zylindergreifeinrichtung an dem Befestigungsabschnitt des Zylinders, d. h. dessen Flansch, und durch radial zustellbare Kolbengreifhebel der Kolbengreifeinrichtung an der axial verstellbaren Kolbenstelleinrichtung.

Wegen der axialen Relativbewegung der Pipette zur Spritze kann die Spritze zum Aufnehmen irgendwo ortsfest gehalten werden, beispielsweise in einem Ständer. Für den Aufnahmevorgang muss nur die Pipette gegenüber der Spritze axial bewegt werden. Zum Abwerfen der Spritze muss man ebenfalls die Spritze nicht anfassen, sie kann einfach axial aus der Pipette herausfallen oder abgeworfen werden. Die Spritze wird dabei nicht berührt, so dass keine Kontamination der Hand mit der pipettierten Flüssigkeit erfolgen kann.

Bei der bekannten Pipette, die zuvor angesprochen worden ist, sind je zwei einander gegenüberstehende Zylindergreifhebel und Kolbengreifhebel vorgesehen, die unter Federkraft in Greifposition stehen und entgegen der Federkraft in Freigabeposition bringbar sind. Zur Betätigung beider Hebelpaare dient eine Betätigungseinrichtung, die ein zentrales, von außen betätigbares Betätigungselement am Pipettengehäuse aufweist.

Bei der zuvor geschilderten Konstruktion erfolgt die Synchronisation mehrerer Zylindergreifhebel und Kolbengreifhebel im Pipettengehäuse von selbst mittels der Kraftübertragungszüge, die vom gemeinsamen, ortsfesten Betätigungselement am Pipettengehäuse ausgeht Das ist handhabungstechnisch praktisch. Problematisch ist allerdings hier einerseits die konstruktive Beschränkung auf ein zusätzliches, zentrales, von außen betätigbares Betätigungselement ortsfest am Pipettengehäuse und andererseits die Tatsache, dass das Lösen der Zylinder- und Kolbengreifeinrichtung nicht unabhängig von einander erfolgen kann.

Bei anderen handhabungstechnisch zweckmäßigen Pipetten mit axialer Spritzenankopplung gibt es ähnliche Probleme mit der Betätigung der Kolbengreifeinrichtung und der Zylindergreifeinrichtung sowie bei der Synchronisation der Zylindergreifhebel (DE 43 41 229 C2; DE 10 2005 023 203 A1, EP 1 524 035 A1, EP2033712 A1). Neben den zuvor erläuterten Pipetten mit axialer Spritzenankopplung gibt es unterschiedliche Konstruktionen von Pipetten mit radialer Spritzenankopplung (DE 199 63 141 A1; DE 29 26 691 A1; Mehrfachdispenser "HandyStep®", der BRAND GMBH+CO KG, Wertheim im Generalkatalog "GK800" ab Seite 61). Die dort vorgeschlagenen konstruktiven Lösungen für entsprechende Kolbengreifeinrichtungen setzen zwingend eine radial gerichtete Ein- und Ausschiebebewegung des Kolbenkopfes per Hand an der Spritze voraus und sind daher für Pipetten mit axialer Spritzenankopplung ungeeignet.

Der Lehre liegt das Problem zugrunde, die eingangs erläuterte bekannte Pipette mit axialer Spritzenankopplung hinsichtlich der konstruktiven und handhabungstcchnischen Gestaltungsmöglichkeiten zu verbessern.

Die zuvor aufgezeigte Problemstellung ist bei der erfindungsgemäßen Pipette mit den Merkmalen des Oberbegriffs von Anspruch 1 durch die Merkmale des kennzeichnenden Teils von Anspruch 1 gelöst. Bevorzugte Ausgestaltungen und Weiterbildungen der Lehre der Erfindung sind Gegenstand der Unteransprüche.

Erfingdungsgemäß ist die Betätigungseinrichtung für die Kolbengreifeinrichtung an der axial verschiebbaren Kolbenstelleinrichtung angebracht und mit dieser im Pipettengehäuse axial verschiebbar. Dadurch entfällt die komplizierte Gestaltung von im Betrieb zu entkoppelnden Kraftübertragungszügen im Pipettengehäuse vom ortsfesten Betätigungselement am Pipettengehäuse zur Kolbengreifeinrichtung und ggf. auch zur Zylindergreifeinrichtung. Die Kraftübertragungszüge sind an der Kolbenstelleinrichtung realisiert und müssen daher im Betrieb, also bei der Verlagerung der Kolbenstelleinrichtung, nicht aufgetrennt werden.

Eine bevorzugte Ausgestaltung der Lehre ist Gegenstand des Anspruchs 2. Dabei ist der Kolbenkopfgreifer durch Betätigen der Betätigungseinrichtung nicht nur aus der den Kolbenkopf freigebenden Freigabeposition in die den Kolbenkopf an der Kolbenstelleinrichtung fixierende Greifposition verstellbar, sondern auch umgekehrt wieder in die Freigabeposition bringbar. Damit ist es möglich, den Kolbenkopf kontrolliert kraftschlüssig zu halten und wieder zu lösen.

Die konstruktive Optimierung gelingt hier insbesondere deshalb, weil die Kolbengreifeinrichtung in besonderer Weise konstruiert ist. Die Kolbengreifeinrichtung weist nämlich eine den Kolbenkopf einer in das Pipettengehäuse eingeschobenen Spritze quer zur Längsachse des Pipettengehäuses, d. h. radial, abstützende Auflage und einen Kolbenkopfgreifer auf, der gegenüber dem Kolbenkopf zwischen einer den Kolbenkopf freigebenden Freigabeposition und einer gemeinsam mit der Auflage den Kolbenkopf an der Kolbenstelleinrichtung fixierenden Greifposition verstellbar ist. Dieser Kolbenkopfgreifer fixiert in der Greifposition den Kolbenkopf an der Kolbenstelleinrichtung in axialer Richtung schlupffrei. Er ist auch mittels der Betätigungseinrichtung in einer zumindest eine erhebliche radiale Komponente aufweisenden Verstellbewegung gegenüber der Auflage verstellbar. In besonders bevorzugter Weise wird eine solche Verstellbewegung dadurch realisiert, dass der Kolbenkopfgreifer an der Kolbenstelleinrichtung schwenkbar gelagert ist. Die radiale Komponente der Verstellbewegung verändert sich dabei im Verlaufe des Heranschwenkens des Kolbenkopfgreifers an die Auflage.

Die Kolbenstelleinrichtung hat also nicht die aus dem Stand der Technik bekannten, einander gegenüber positionierten und radial zustellbaren Kolbengreifhebel, sondern nun den Kolbenkopfgreifer und als Widerlager für dessen Zustellbewegung die radial wirkende Auflage an der Kolbenstelleinrichtung. In der Greifposition entsteht eine radial initiierte Klemmkraft ohne weitere Bauteile. Sie wird unmittelbar von dem einen Kolbenkopfgreifer erzeugt. Der Kolbenkopfgreifer ist in vorteilhafter Ausführungsform einteilig ausgeführt.

Anstatt einer einzigen Paarung aus Kolbenkopfgreifer und Auflage können aber auch mehrere solcher Bauteile, die beispielsweise den Kolbenkopf von unterschiedlichen Seiten aus radial erfassen, eingerichtet sein.

Erfindungsgemäß ist der wesentliche Teil der Kolbengreifeinrichtung in den verstellbaren Kolbenkopfgreifer verlegt worden, der sich kollisionsfrei in Freigabeposition befindet, wenn der Kolbenkopf der anzukoppelnden Spritze axial in das Pipettengehäuse und die darin befindliche Kolbengreifeinrichtung eingeschoben wird. Auch die radial abstützende Auflage, die als Widerlager für den Kolbenkopfgreifer dient, ist so angeordnet, dass der Kolbenkopf der anzukoppelnden Spritze axial kollisionsfrei eingeschoben werden kann.

Eine besonders zweckmäßige konstruktive Ausgestaltung ergibt sich aus Anspruch 3 mit dem angegebenen zusätzlichen Anschlag. Dieser stützt den Kolbenkopf der in das Pipettengehäuse eingeschobenen Spritze entgegen der Verstellbewebung des Kolbenkopfgreifers in die Freigabeposition ab. Dieser Anschlag wirkt gewissermaßen als Niederhalter für den Kolbenkopf, so dass sich der Kolbenkopfgreifer auf dem Weg in die Freigabeposition vom Kolbenkopf lösen kann und diesen nicht unter Wirkung des Kraftschlusses nach oben anhebt.

Eine weitere zweckmäßige Konstruktion ist im Anspruch 4 beschrieben. Die Kolbenstelleinrichtung weist zweckmäßigerweise ein axial einfederndes Druckstück auf. An diesem ist vorzugsweise eine axial ausgerichtete Anschlagfläche angeordnet, die den Kolbenkopf einer in das Pipettengehäuse eingeschobenen Spritze axial abstützt.

Damit wird erreicht, dass der Kolbenkopf beim Einsetzen der Spritze zwangsweise in die Stellung gebracht wird, in der der Kolben vollständig in den Zylinder eingeschoben ist. Diese konstruktive Lösung ist als solche für eine radial anzukoppelnde Spritze bereits bekannt (DE 199 63 141 A1), gewinnt hier aber für die axiale Spritzenankopplung in Verbindung mit dem Kolbenkopfgreifer eine eigene Bedeutung. Beim Abwerfen der Spritze wirkt die Federkraft des Druckstückes für das Abwerfen unterstützend, so dass die Spritze sicher abgeworfen und vollständig aus dem Pipettengehäuse entfernt wird.

Auch der Anschlag, der die Funktion eines Niederhalters hat, ist zweckmäßigerweise am Druckstück angeordnet.

Zweckmäßigerweise ist das Druckstück gegen den Kolbenkopf axial vorgespannt und nimmt somit ohne Spritze eine vordere Position und mit einer eingeschobenen Spritze eine hintere Position ein. Auch das ist im Grundsatz die Funktion der Lösungen des Standes der Technik. Mit dieser konstruktiven Lösung ist es möglich, dass das Druckstück in seiner vorderen Position die Kolbengreifeinrichtung blockiert, so dass der Kolbenkopfgreifer dann nicht in die Greifposition verstellbar ist. Ohne Spritze kann also der Kolbenkopfgreifer nicht aktiviert werden. Damit kann man verhindern, dass bei geschlossenem Kolbenkopfgreifer eine Spritze eingesetzt wird. Eine unsachgemäße Handhabung der Pipette wird also verhindert.

Der Bewegungsablauf für die Betätigungseinrichtung wird durch die radiale Verstellbewegung der Betätigungseinrichtung gegenüber der Kolbenstelleinrichtung gemäß Anspruch 5 optimiert, insbesondere wenn man die Variante mit der überlagerten Schwenkbewegung um eine quer verlaufende Schwenkachse wählt. Diese zunächst quer zur axialen Führung der Kolbenstelleinrichtung verlaufende Verstellbewegung erlaubt es zusammen mit einer Kulissenführung, die Betätigungseinrichtung sowohl zum Antrieb des Kolbenkopfgreifers als auch zur Betätigung der Kolbenstelleinrichtung und damit des Kolbens der Spritze, zu verwenden.

Besonders vorteilhafte konstruktive Ausgestaltungen des Kolbenkopfgreifers sind Gegenstand von Anspruch 6. Hier werden Überlegungen aufgegriffen und an die vorliegende Konstruktion in innovativer Weise angepasst, die als solche ähnlich bei einem Pipettiersystem mit radialer Spritzenankopplung bereits angesprochen worden sind (DE 199 63 141 A1).

Bei axialer Spritzenankopplung gilt in besonderem Maße, dass das axiale Ankoppeln möglichst leicht ablaufen soll. Dafür können entsprechend gestaltete und angeordnete Einführschrägen an der Auflage und auch am Anschlag dienen. Damit wird das manuelle Zusammenfügen von Pipette und Spritze erleichtert. Hinsichtlich der konstruktiven Gestaltung der Zylindergreifeinrichtung werden erfindungsgemäß nach bevorzugter Lehre mindestens ein im Pipettengehäuse schwenkbar gelagerter Zylindergreifhebel realisiert, wie das Gegenstand des Anspruchs 8 ist. Ein automatisches Ankoppeln beim Zusammenfügen von Pipette und Spritze ist dadurch möglich.

Die Betätigungseinrichtung kann man zusätzlich auch zur Betätigung der Zylindergreifeinrichtung nutzen. Das ist Gegenstand des Anspruchs 9. Besondere konstruktive Ausgestaltungen dieser gekoppelten Ausführung sind Gegenstand der Ansprüche 10 bis 13.

Als Alternative kann man aber auch vorsehen, dass für die Betätigung der Zylindergreifeinrichtung ein am Pipettengehäuse verschiebbar angeordneter zusätzlicher Betätigungsschieber vorgesehen ist. Das ist Gegenstand der Ansprüche 14 und 15.

Damit ist es möglich, die Spritze getrennt zu lösen und zwar einerseits mit der Kolbengreifeinrichtung den Kolben und andererseits mit der Zylindergreifeinrichtung den Befestigungsabschnitt des Zylinders. Dadurch ist es auch möglich, eine Spritze mit aufgezogener Flüssigkeit aus der Pipette zu entnehmen, um sie anderweitig oder später zu verwenden.

Schließlich kann man im Grundsatz auch eine doppelte Betätigungsmöglichkeit für die Zylindergreifeinrichtung vorsehen.

Im folgenden wird die Erfindung nun anhand einer lediglich Ausführungsbeispiele darstellenden Zeichnung näher erläutert. In den Zeichnungen zeigen die Figuren folgendes:
- Fig. 1: eine perspektivische Darstellung einer erfindungsgemäßen Pipette mit eingesetzter Spritze,
- Fig. 2a: im Längsschnitt, ausschnittweise am unteren Ende des Pipettengehäuses, ein bevorzugtes Ausführungsbeispiel einer Pipette gemäß der Erfindung mit eingesetzter Spritze, bereit zum Aufsaugen von Flüssigkeit,
- Fig. 2b: eine Draufsicht der Pipette nach Fig. 2a,
- Fig. 3a: in einem Fig. 2a ähnlichen Längsschnitt die Pipette gemäß der Erfindung mit eingesetzter Spritze und geöffneter Kolbengreifeinrichtung,
- Fig. 3b: in einer Fig. 2b ähnlichen Draufsicht die Pipette nach Fig. 3a,
- Fig. 4a: in einem Fig. 2a ähnlichen Längsschnitt die Pipette gemäß der Erfindung, mit geöffneter Kolben- und Zylindergreifeinrichtung mit gerade entnommener oder einzusetzender Spritze,
- Fig. 4b: in einer Fig. 2b ähnlichen Draufsicht die Pipette nach Fig. 4a,
- Fig. 5a: im Längsschnitt, ausschnittweise am unteren Ende des Pipettengehäuses, ein weiteres Ausführungsbeispiel einer Pipette gemäß der Erfindung mit eingesetzter Spritze, bereit zum Aufsaugen von Flüssigkeit,
- Fig. 5b: eine Draufsicht auf die Pipette nach Fig. 5a,
- Fig. 6a: in einem Fig. 3a ähnlichen Längsschnitt das weitere Ausführungsbeispiel mit eingesetzter Spritze und geöffneter Kolbengreifeinrichtung,
- Fig. 6b: in einer Fig. 3b ähnlichen Draufsicht die Pipette nach Fig. 6a,
- Fig. 7a: in einem Fig. 4a ähnlichen Längsschnitt das weitere Ausführungsbeispiel mit geöffneter Kolben- und Zylindergreifeinrichtung mit entnommener oder einzusetzender Spritze,
- Fig. 7b: in einer Fig. 4b ähnlichen Draufsicht die Pipette nach Fig. 7a,
- Fig. 8: Detailansichten eines bevorzugten Ausführungsbeispiels der Betätigungseinrichtung einer Pipette gemäß der Erfindung.

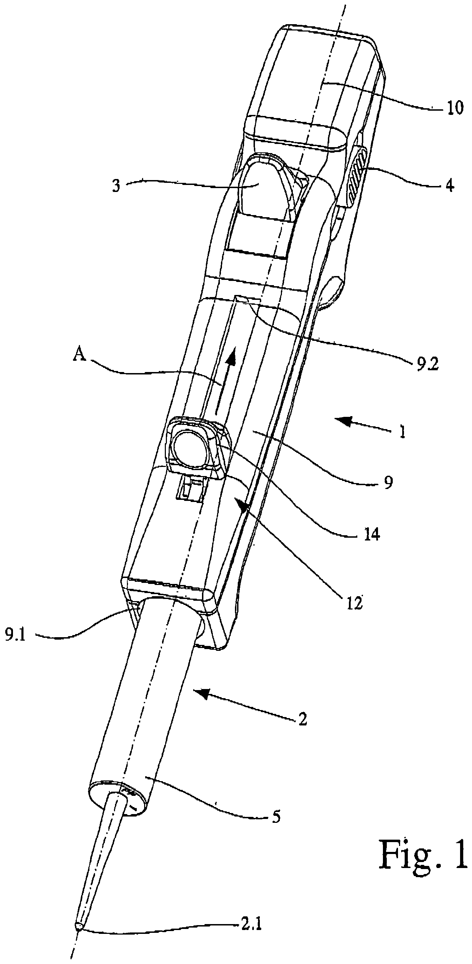

Fig. 1 zeigt die grundsätzliche Gestaltung einer erfindungsgemäßen Pipette 1 mit einer eingesetzten Spritze 2. Die Pipette 1 wird hinsichtlich der Betätigung der Spritze 2 im Betrieb mittels einer Taste 3 angetrieben. Eine Verstelleinrichtung 4 erlaubt eine Verstellung des Hubwegs je Tastenhub.

Die Spritze 2 besteht typischerweise aus Kunststoffmaterial und weist einen Zylinder 5 mit einem Befestigungsabschnitt 6 und einen in dem Zylinder 5 laufenden Kolben 7 mit einem Kolbenkopf 8 auf. Die Spritze 2 selbst ist für sich handhabbar und auswechselbar, Die jeweils mit der Pipette 1 zu handhabende, auswechselbare Spritze 2 kann bei der in Fig. 1 dargestellten Pipette 1 axial in die Pipette eingeschoben und auch axial aus dieser wieder entfernt bzw. von dieser abgeworfen werden.

In den Zylinder 5 der Spritze 2 wird über die unten angedeutete Ansaugöffnung 2.1 Flüssigkeit eingesogen und durch Betätigen der Taste 3 geteilt in mehrere einander folgende Teilmengen wieder abgegeben.

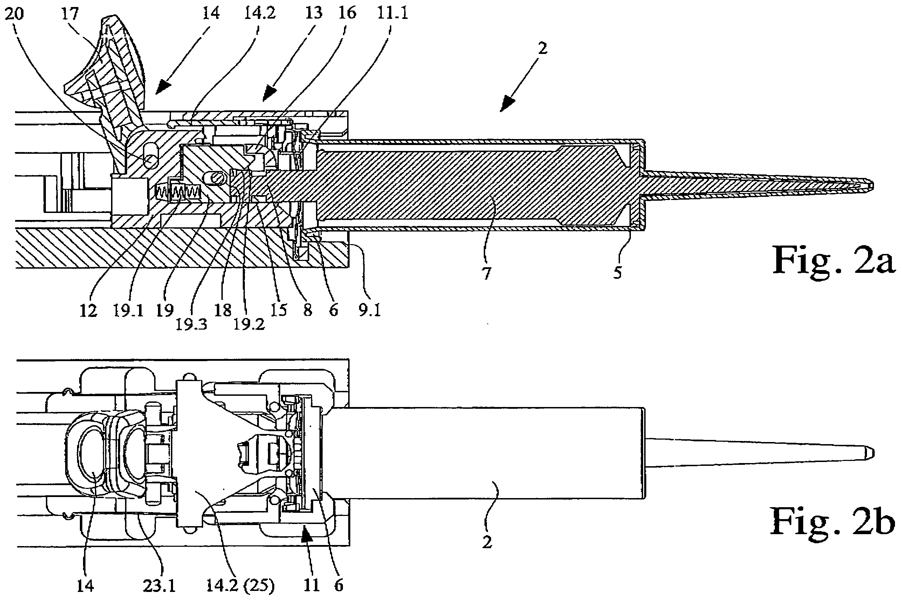

Die folgenden Figuren 2 bis 7 zeigen jeweils das axial untere Ende der Pipette 1 aus Fig. 1. Um die dort realisierte Mechanik geht es bei der vorliegenden Erfindung. Jeweils ist in der ersten Teilfigur (a) ein Längsschnitt an dieser Stelle gezeigt, in der zweiten Teilfigur (b) dann eine Draufsicht an dieser Stelle.

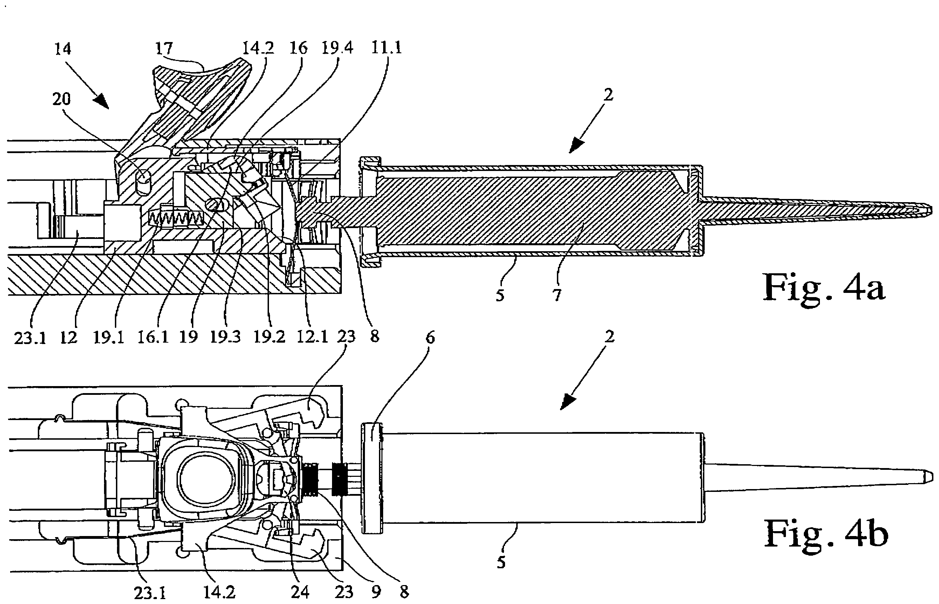

Aus Fig. 1 in Verbindung mit Fig. 2 lässt sich zunächst erkennen, dass der Befestigungsabschnitt 6 des Zylinders 5 hier und vorzugsweise als ringförmiger Flansch ausgeführt ist. Am Kolben 7 befindet sich ein auch bei vollständig in den Zylinder 5 eingeschobenem Kolben 7 (Fig. 2) aus dem Zylinder 5 endseitig herausragender Kolbenkopf 8. Man erkennt dies auch besonders gut bei abgenommener Spritze 2, die in Fig. 4 dargestellt ist.

Die Pipette 1 weist ein Pipettengehäuse 9 auf, das eine Längsachse 10 aufweist. Die Spritze 2 ist in das Pipettengehäuse 9 an einer dortigen axialen Öffnung 9.1 so eingesetzt, dass sie in Richtung der Längsachse 10 ausgerichtet ist. Im nachfolgenden Text beziehen sich alle Richtungsangaben auf die Längsachse 10. Der Begriff "axial" bedeutet "in Richtung der Längsachse 10", schließt allerdings Linien parallel zur Längsachse 10 selbst ein. In Fig. 1 zeigt der Pfeil A die axiale Richtung auch optisch an. Der Begriff "radial" bedeutet eine Ausrichtung quer zur Längsachse 10 des Pipettengehäuses 9 bzw. entsprechender zu der Längsachse 10 paralleler Linien.

Aus einer Verbindung von Fig. 1, 2 und 4 lässt sich besonders gut entnehmen, dass eine mit der Pipette 1 zu handhabende Spritze 2 mit ihrem Befestigungsabschnitt 6 und dem Kolbenkopf 8 in Richtung der Längsachse 10 des Pipettengehiluses 9, nach der zuvor erläuterten Begriffsbildung also axial, in das Pipettengehäuse 9 einschiebbar und aus diesem entfernbar bzw. abwerfbar ist. Gattung der vorliegenden Erfindung ist also eine Pipette 1 mit axial ankoppelbarer oder abwerfbarer Spritze 2. Die axial zugängliche Öffnung 9.1 am Pipettengehäuse 9 sieht man auch in Fig. 2a und in allen anderen Figuren.

Fig. 2 zeigt eine axial zugängliche, im Pipettengehäuse 9 ortsfest angebrachte Zylindergreifeinrichtung 11 für den Befestigungsabschnitt 6 der Spritze 2. Fig. 2a/b zeigt, wie der Befestigungabschnitt 6 mit der Zylindergreifeinrichtung 11 gehalten wird.

Ferner ist im Pipettengehäuse 9 axial verschiebbar eine Kolbenstelleinrichtung 12 vorgesehen. Die Kolbenstelleinrichtung 12 wird durch Betätigen der Taste 3 zum Ausstoßen von Teilmengen von Flüssigkeit aus der Spritze 2 angetrieben. An der Kolbenstelleinrichtung 12 ist eine Kolbengreifeinrichtung 13 für den Kolbenkopf 8 der Spritze 2 angebracht, die axial zugänglich und mit der Kolbenstelleinrichtung 12 im Pipettengehäuse 9 axial verschiebbar ist.

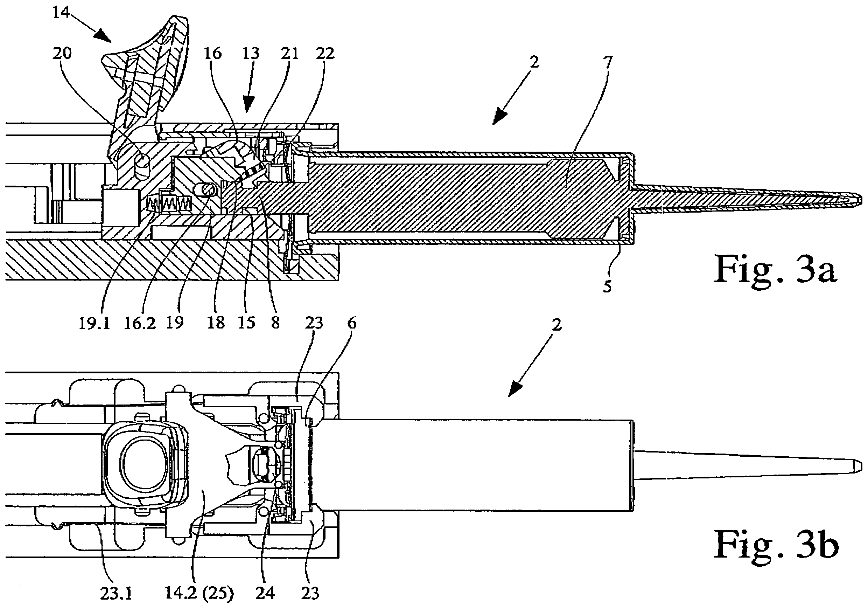

An der Kolbenstelleinrichtung 12 befindet sich eine Betätigungseinrichtung 14 für die Kolbengreifeinrichtung 13. Die Kolbengreifeinrichtung 13 ist durch Betätigen der Betätigungseinrichtung 14 aus einer Greifposition, Fig. 2, in eine Freigabeposition, Fig. 3, bringbar, in der der Kolbenkopf 8 einer Spritze 2 zur Entnahme oder Aufnahme freigegeben ist.

Die Kolbenstelleinrichtung 12 wird im dargestellten Ausführungsbeispiel auch zum Verfahren in axialer Richtung, vorwiegend zum Aufsaugen von Flüssigkeit, mittels der Betätigungseinrichtung 14 angetrieben. Man erkennt dazu im Pipettengehäuse 9 eine Öffnung 9.2 für die Betätigungseinrichtung 14 der Kolbenstelleinrichtung 12. Zum Aufsaugen von Flüssigkeit in die Spritze 2 hinein wird die Betätigungseinrichtung 14 in Fig. 1 am Pipettengehäuse 9 in Richtung des Pfeils A nach oben geschoben bis zum durch die Öffnung 9.2 gebildeten oberen Anschlag. Die Abwärtsbewegung zum Abgeben von Teilmengen erfolgt dann durch Betätigen der Taste 3 in einzelnen Stufen.

Wesentlich ist nun, dass die Betätigungseinrichtung 14 für die Kolbengreifeinrichtung 13 an der Kolbenstelleinrichtung 12 angebracht und mit dieser axial verschiebbar ist, wie das Fig. 1 bereits gezeigt hat. Die Betätigungseinrichtung 14 wird also nicht, wie im eingangs erläuterten Stand der Technik, beim Arbeiten mit der Pipette 1 von der Kolbenstelleinrichtung 12 getrennt. Das hat die im allgemeinen Teil der Beschreibung genannten Vorzüge.

Die zuvor erläuterte grundsätzliche Lehre der Erfindung ist in Fig. 2, 3 und 4 in einem besonderen Ausführungsbeispiel ausgestaltet worden.

Für das in den Fig. 2 bis 4 dargestellte Ausführungsbeispiel gilt zunächst, dass die Kolbengreifeinrichtung 13 durch Betätigen der Betätigungseinrichtung 14 auch aus der Freigabeposition in die Greifposition bringbar ist, dass die Kolbengreifeinrichtung 13 eine den Kolbenkopf 8 einer in das Pipettengehäuse 9 eingeschobenen Spritze 2 quer zur Längsachse 10 des Pipettengehäuses 9, d. h. radial, abstützende Auflage 15 und einen verstellbaren Kolbenkopfgreifer 16 aufweist, dass der Kolbenkopfgreifer 16 durch Betätigen der Betätigungseinrichtung 14 aus der den Kolbenkopf 8 freigebenden Freigabeposition in die den Kolbenkopf 8 an der Kolbenstelleinrichtung 12 fixierende Greifposition verstellbar ist und dass der Kolbenkopfgreifer 16 mittels der Betätigungseinrichtung 14 in einer zumindest eine erhebliche radiale Komponente aufweisenden Verstellbewegung gegenüber der Auflage 15 verstellbar ist. Nach besonders bevorzugter Lehre realisiert man diese Verstellbewegung dadurch, dass der Kolbenkopfgreifer 16 an der Kolbenstelleinrichtung 12 schwenkbar gelagert ist. Die radiale Komponente der Verstellbewegung verändert sich während der Verstellbewegung des Kolbenkopfgreifers 16. Sie wird immer größer, je näher der Kolbenkopfgreifer 16 der Auflage 15 kommt.

In Fig. 2 sind oben in Fig. 2a im Längsschnitt und unten in Fig. 2b in Draufsicht die Bauteile der Pipette 1 in Greifposition gezeigt. Der Kolbenkopfgreifer 16 ist mittels der Betätigungseinrichtung 14 in der eine erhebliche radiale Komponente aufweisenden Verstellbewegung gegenüber der Auflage 15 nach unten in die Greifposition verstellt worden. Um die Kraft ausüben zu können, ist die Betätigungseinrichtung mit einem stabilen Betätigungshebel 17 ausgerüstet.

In Fig. 3 ist der geöffnete, in der Freigabeposition befindliche Kolbenkopfgreifer 16 dargestellt. Die Betätigungseinrichtung 14 ist dazu von Fig. 2 nach Fig. 3 in der in Fig. 3a gezeigten Ebene nach rechts geschwenkt worden. Man sieht, dass der Kolbenkopfgreifer 16 in Fig. 3a gegenüber Fig. 2a angehoben worden ist. Der Kolbenkopfgreifer 16 wurde dabei um eine Achse 16.2 an der Kolbenstelleinrichtung 12 geschwenkt. Der Kolbenkopf 8 ist jetzt freigegeben und könnte, wenn gewünscht, nach rechts aus dem Pipettengehäuse 9 herausgezogen werden.

Das dargestellte und bevorzugte Ausführungsbeispiel zeigt dabei, dass hier der Kolbenkopfgreifer 16 einteilig ausgeführt ist, gewissermaßen als U-förmiger Korpus. Grundsätzlich könnte der Kolbenkopfgreifer 16 aber auch aus mehreren Bestandteilen aufgebaut sein.

Ein Vergleich von Fig. 2a und Fig. 3a zeigt ferner, dass in diesem Ausführungsbeispiel die Kolbenstelleinrichtung 12 einen Anschlag 18 aufweist, der den Kolbenkopf einer in das Pipettengehäuse 9 eingeschobenen Spritze 2 in einer zu der Abstützrichtung der Auflage 15 unterschiedlichen Richtung, vorzugsweise radial, entgegen der Verstellbewegung des Kolbenkopfgreifers 16 in die Freigabeposition abstützt. Fig. 3a zeigt, dass mittels des Anschlags 18 an der Kolbenstelleinrichtung 12 der Kolbenkopf 8 unten auf der Auflage 15 gehalten wird, obwohl der Kolbenkopfgreifer 16 nach oben abgezogen worden ist. Der Anschlag 18 wirkt also als eine Art Niederhalter.

Fig. 2 und 3 zeigen ferner, dass die Kolbenstelleinrichtung 12 ein axial einfederndes Druckstück 19 aufweist. Dieses axial einfedernde Druckstück 19 ist durch eine Druckfeder 19.1 in Fig. 2 und 3 nach rechts vorgespannt, so dass bei eingesetzter Spritze 2 der Kolben 7 sicher bis an den Boden des Zylinders 5 vorgeschoben worden ist.

Am Druckstück 19 findet sich eine Einführschräge 19.2. Nach bevorzugter Lehre befindet sich am Druckstück 19 auch eine axial ausgerichtete Anschlagfläche 19.3, die den Kolbenkopf 8 einer in das Pipettengehäuse 9 eingeschobenen Spritze 2 axial abstützt und so die zuvor geschilderte Vorschubfunktion erfüllt.

Nach bevorzugter Lehre der Erfindung ist auch der Anschlag 18 am Druckstück 19 angeordnet. Das Druckstück 19 vereint also die axiale Vorschubfunktion mit der Niederhalterfunktion für den Kolbenkopf 8.

Ein Vergleich von Fig. 3a und Fig. 4a macht deutlich, dass das Druckstück 19 gegen den Kolbenkopf 8 der axial einzuschiebenden Spritze 2 mittels der Druckfeder 19.1 axial vorgespannt ist und so ohne Spritze 2 (Fig. 4a) eine vordere und mit einer eingeschobenen Spritze 2 (Fig. 2a, 3a) eine hintere, tiefer im Pipettengehäuse 9 liegende Position einnimmt.

Die gesamte Konstruktion mit dem axial federbelasteten Druckstück 19 gewährleistet, dass der Kolben 7 stets ganz in den Zylinder 5 geschoben ist. Beim Aufsaugen von Flüssigkeit in die Spritze 2 ist so die verbleibende Luftmenge so gering wie möglich.

Die axiale Verschiebebewegung des Druckstücks 19 unter Wirkung der Druckfeder 19.1 kann man zur Steuerung der Kolbengreifeinrichtung 13 nutzen. Nach bevorzugter und hier dargestellter Lehre der Erfindung ist dazu vorgesehen, dass das Druckstück 19 in seiner vorderen Position die Kolbengreifeinrichtung 13 blockiert, so dass der Kolbenkopfgreifer 16 nicht in die Greifposition verstellbar ist, und in der hinteren Position die Kolbengreifeinrichtung 13 freigibt, so dass der Kolbenkopfgreifer 16 in die Greifposition verstellbar ist.

In der in Fig. 4a dargestellten Position kann der Kolbenkopfgreifer 16, wie man Fig. 4a anhand der Lage der Kanten deutlich entnehmen kann, nicht nach unten geschwenkt werden und die Greifposition erreichen. Hingegen ist das beim Übergang von Fig. 3a nach Fig. 2a ohne weiteres möglich. Man sieht das daran, dass in Fig. 4 die Fläche 16.1 am Kolbenkopfgreifer 16 mit der Oberseite 19.4 des Druckstücks 19 beim Herabschwenken des Kolbenkopfgreifers 16 kollidieren würde. Im Übergang von Fig. 3 nach Fig. 2 wäre das hingegen nicht der Fall.

Im Ausführungsbeispiel von Fig. 2 bis 4 und 8 fällt auf, dass die Betätigungseinrichtung 14 derart an der Kolbenstelleinrichtung 12 angebracht ist, dass sie für die Verstellung des Kolbenkopfgreifers 16 aus der Greifposition in die Freigabeposition radial verschiebbar und optional zusätzlich um eine sowohl quer zur Längsachse 10 als auch quer zur Verschieberichtung verlaufende Schwenkachse 20 schwenkbar ist.

Die Betätigungseinrichtung 14 bzw. der Betätigungshebel 17 der Betätigungseinrichtung 14, ist um die sowohl quer zur Längsachse als auch quer zur Verschieberichtung verlaufende Schwenkachse 20 schwenkbar. Man erkennt, dass die Schwenkachse 20 radial verschiebbar oder verstellbar ist. Das sieht man im Vergleich von Fig. 2a zu Fig. 3a und Fig. 4a. Die Schwenkachse 20 ist im Langloch der Kolbengreifeinrichtung 12 von unten nach oben gewandert. Man hat also hier eine überlagerte Verschiebebewegung und Schwenkbewegung um die Schwenkachse 20.

Fig. 3 und 4 lassen am Kolbenkopfgreifer 16 erkennen, dass hier seitlich angeordnete Klemmbacken 21 vorgesehen sind, die vorzugsweise seitlich klemmend und axial erhebliche Zugkräfte von der Kolbenstelleinrichtung 12 auf den Kolben übertragen können.

Im dargestellten und bevorzugten Ausführungsbeispiel kann man sehen, dass die Klemmbacken 21 mit Profilierungen 22 (Fig. 3a), die den Kolbenkopf 8 formschlüssig und/oder kraftschlüssig halten. Besonders bevorzugt sind schneidenartige Profilierungen. Diese schneidenartigen Profilierungen können in Form von Schneidenrollen ausgeführt sein. Man kann auch feststehende schneidenartige Profilierungen einerseits mit Schneidenrollen andererseits verbinden.

Die Profilierungen 22 sind, in Greifposition betrachtet, so angeordnet, dass sie ungleich zur Mittellinie des Kolbenkopfes 8 der Spritze 2 liegen. Sie sind also etwas schräg, gewissermaßen windschief und ggf. auch versetzt zur Längsachse 10 verlaufend angeordnet. Die Betätigungskraft für den Kolbenkopfgreifer 16 ist so geringer, als wenn die Profilierungen 22 in Greifposition genau in Richtung der Längsachse 10 angeordnet wären.

Geht man von Fig. 3a aus, so wird der Kolbenkopfgreifer 16 von dort aus durch eine Schwenkung der Betätigungseinrichtung 14 bzw. des Betätigungshebels 17 nach links von der in Fig. 3a gezeigten Freigabeposition in die in Fig. 2a gezeigte Greifposition gebracht. Diese Kraftübertragung erfolgt über ein nicht dargestelltes Gelenkgetriebe. Dabei wird der Kolbenkopfgreifer 16 mit seinen seitlich angeordneten Klemmbacken 21 mit den Profilierungen 22 in Richtung der radial abstützenden Auflage 15 geschwenkt unter hohem Kraftaufwand mit einer erheblichen radialen Bewegungskomponente. Der Kolbenkopf 8 stützt sich dabei auf der Auflage 15 ortsunveränderlich wie an einem Widerlager ab. Die Klemmbacken 21 ergreifen den Kolbenkopf 8 in der Greifposition so, dass er bezüglich der Kolbenstelleinrichtung 12 in axialer Richtung fixiert ist und so der Kolben 7 durch Verstellen der Kolbenstelleinrichtung 12 im Zylinder 5 verschoben werden kann.

Der Kolbenkopfgreifer 16 erzeugt in der Greifposition mit seinem in diesem Ausführungsbeispiel U-förmigen Körper und den seitlich angeordneten Klemmbacken 21 die Klemmkraft am Kolbenkopf 8 ohne aus dem Stand der Technik genannte Gelenkgetriebe oder Federunterstützung. Im dargestellten und bevorzugten Ausführungsbeispiel ist der Kolbenkopfgreifer 16 einteilig ausgeführt. Grundsätzlich wäre es auch möglich, den Kolbenkopfgreifer 16 in mehreren Teilen aufzubauen.

Die Profilierungen 22 an den Klemmbacken 21 können unmittelbar am Material des Kolbenkopfgreifers 16 ausgeformt sein. Eine Alternative besteht in separaten Schneidenrollen als Profilierungen 22. Solche Schneidenrollen können aus relativ hartem Werkstoff, beispielsweise Stahl oder hartem Kunststoff bestehen und sind dann in die Klemmbacken 21 eingesetzt.

Eine eigenständige Stabilisierung der Konstruktion in Greifposition ergibt sich dadurch, dass die Profilierungen 22 bei in der Greifposition befindlichem Kolbenkopfgreifer 16 unterhalb einer Mittellinie des Kolbenkopfes 8 der Spritze 2 liegen.

Zuvor ist bereits darauf hingewiesen worden, dass das Druckstück 19 eine Einführschräge 19.2 aufweist, um das axiale Einschieben des Kolbenkopfes 8 der Spritze 2 zu erleichtern. Eine entsprechende Einführschräge 12.1 kann auch an der Auflage 15, die an der Kolbenstelleinrichtung 12 ausgebildet ist, vorgesehen sein. Das ist in Fig. 4a identifiziert worden. Ebenso sind Einführschrägen an den Klemmbacken 21 des Kolbenkopfgreifers 16 angeformt.

Aus den Draufsichten in Fig. 3b und 4b kann man im übrigen erkennen, dass im dargestellten und bevorzugten Ausführungsbeispiel die Zylindergreifeinrichtung 11 zwei im Pipettengehäuse 9 schwenkbar gelagerte Zylindergreifhebel 23 aufweist, die zum Befestigungsabschnitt 6 einer eingeschobenen Spritze 2 hin radial unter Federkraft angestellt sind und dass, hier und vorzugsweise, jeder Zylindergreifhebel 23 einen Antriebsarm 24 aufweist.

In Fig. 2b und 3b sieht man die jedem der Zylindergreifhebel 23 zugeordnete Biegefeder 23.1 relativ entspannt stehen. Demgegenüber ist die entsprechende Biegefeder 23.1 in Fig. 4b wegen Verschwenkung des Zylindergreifhebels 23 in die Freigabeposition stärker gespannt. Entfällt die Beeinflussung der Zylindergreifhebel 23 mittels der Betätigungseinrichtung 14 in Fig. 4, so kehren die Zylindergreifhebel 23 unter Wirkung der Biegefedern 23.1 wieder in ihre Ausgangsstellung von Fig. 2b und 3b zurück.

Fig. 2, 3 und 4 machen in ihrer Abfolge deutlich, dass die Betätigungseinrichtung 14 bzw. deren Betätigungshebel 17 zum Verstellen des Kolbenkopfgreifers 16 aus der Greifposition in die Freigabeposition eine Schwenkbewegung nach vorne, d. h. in Richtung der Spritze 2, ausführt und dass zum Verstellen der Zylindergreifeinrichtung 11 aus der Greifposition in die Freigabeposition diese Schwenkbewegung nach vorne fortgesetzt wird. Die Fortsetzung der Schwenkbewegung sieht man im Übergang von Fig. 3a nach Fig. 4a. Diese Bewegungsabfolge entspricht einer intuitiv zweckmäßigen Bewegung der Betätigungseinrichtung 14.

Im Übergang von Fig. 3 nach Fig. 4 erkennt man auch die Auswirkung der Bewegung der Betätigungseinrichtung 14 auf die Zylindergreifhebel 23. Es ist nämlich hier vorgesehen, dass bei der Fortsetzung der Schwenkbewegung der Betätigungseinrichtung 14 die Zylindergreifhebel 23 der Zylindergreifeinrichtung 11 vom Befestigungsabschnitt 6 einer eingeschobenen Spritze 2 weg verstellt werden. Man erkennt, das im Übergang von Fig. 3b auf Fig. 4b anhand der Spreizstellung der Zylindergreifhebel 23.

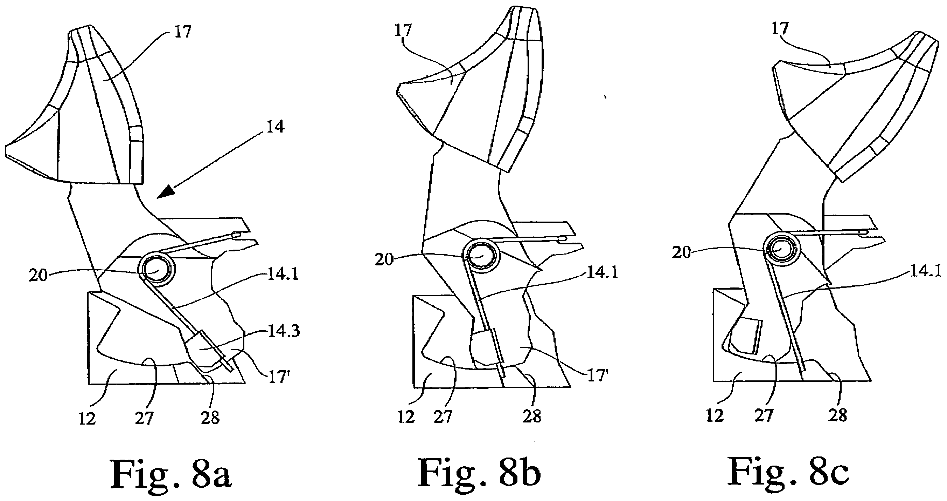

Für die Bewegungsabfolge der Betätigungseinrichtung 14 bzw. ihres Betätigungshebels 17 wird auf Fig. 8 Bezug genommen, die hier eine vergrößerte Darstellung zeigt. Das ist eine Möglichkeit, eine solche Konstruktion zu realisieren.

In Fig. 8 erkennt man, dass sich an der Kolbenstelleinrichtung 12 eine Kulisse 27 mit einer Anlaufschräge 28 findet. Der Betätigungshebel 17 sitzt mit seinem unteren Arm 17' normalerweise unter der Federkraft eines Federelements 14.1 an der Anlaufschräge 28. Das Federelement 14.1, eine Schenkelfeder, drückt mit seinem horizontalen, sich abstützenden Schenkel die Schwenkachse 20 und den Betätigungshebel 17 nach unten. Dadurch ist eine definierte Position des Betätigungshebels 17 der Betätigungseinrichtung 14 vorgegeben (Fig. 8a). Das Federelement 14.1 wirkt in Richtung der Schwenkbewegung zum Verstellen des Kolbenkopfgreifers 16 aus der Greifposition in die Freigabeposition.

Die in Fig. 8a dargestellte Position ist stabil und wird bei normalem Betrieb von der Betätigungseinrichtung 14 nicht verlassen. Wenn der Betätigungshebel 17 in Fig. 8a nach rechts, im Uhrzeigersinn geschwenkt wird, so drückt der untere Arm 17' des Betätigungshebels 17 auf die Anlaufschräge 28 und schiebt den gesamten Betätigungshebel 17 mitsamt seiner Schwenkachse 20 und entgegen der Federkraft des Federelements 14.1 nach oben (radial ausweichend). Das sieht man im Übergang von Fig. 8a auf Fig. 8b. Der untere Arm 17' des Betätigungshebels 17 läuft in der Kulisse 27 der Kolbenstelleinrichtung 12.

Fig. 8b zeigt, dass in dieser Position, das ist die Fig. 3 entsprechende Position der Betätigungseinrichtung 14, das Federelement 14.1 an einer erhöhten Anschlagfläche unterhalb der Kulisse 27 anschlägt. Wird jetzt der Betätigungshebel 17 der Betätigungseinrichtung 14 weiter im Uhrzeigersinn geschwenkt, also in Richtung der Position in Fig. 8c, so verändert sich die Lage der Schwenkachse 20 radial nicht mehr (bestimmt durch das Langloch der Kolbenstelleinrichtung 12, das in Fig. 2 bis 4 dargestellt ist). Die Betätigungseinrichtung 14 schwenkt aber weiter, jetzt mit für die Schwenkbewegung neutralisiertem Federelement 14.1. Zum Verstellen der Zylindergreifeinrichtung 11 ist also das Federelement 14.1 soweit unwirksam, dass nur noch die Reibungskraft zwischen dem unteren Arm 17' und der Kulisse 27 wirkt.

Anhand von Fig. 2 bis 4 und Fig. 8 ist dargestellt worden, wie die Betätigungseinrichtung 14 den Kolbenkopfgreifer 16 betätigt. Für die Betätigung der Zylindergreifeinrichtung 11 zeigt das Ausführungsbeispiel in Fig. 2 bis 4 weiter, dass die Betätigungseinrichtung 14 bei ihrer weiteren Schwenkbewegung einen Kraftübertragungszug 14.2 antreibt, der über die Antriebsarme 24 die Zylindergreifhebel 23 der Zylindergreifeinrichtung 11 symmetrisch öffnet. Man sieht diesen Vorgang im Übergang von Fig. 3 nach Fig. 4. Der Kraftübertragungszug 14.2 hat sich dort ein wenig nach rechts bewegt und so die Zylindergreifhebel 23 symmetrisch geöffnet (Fig. 4b).

Fig. 4 zeigt die Spritze 2 rechts abgerückt von dem Pipettengehäuse 9 um anzudeuten, dass man in dieser Position die Spritze 2 vom Pipettengehäuse 9 trennen oder in dieses axial einschieben kann.

Fig. 1 in Verbindung mit Fig. 2 bis 4 macht ferner deutlich, dass hier vorgesehen ist, dass die Pipette 1 eine Abdeckung 25 zum Verschließen einer Öffnung 9.2 im Pipettengehäuse 9 für die Betätigungseinrichtung 14 der Kolbenstelleinrichtung 12 aufweist und dass die Abdeckung 25 den Kraftübertragungszug 14.2 bildet. Das sieht man insbesondere unten eingezeichnet in Fig. 2b.

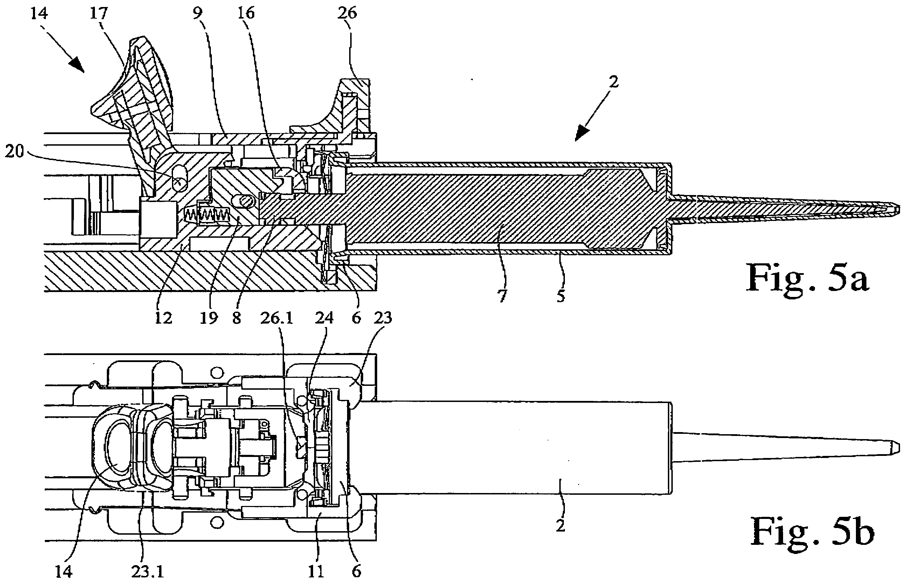

Fig. 5, 6 und 7 zeigen in einer entsprechenden Darstellung wie zum ersten Ausführungsbeispiel gemäß Fig. 2, 3, 4 ein zweites, ebenfalls zweckmäßiges Ausführungsbeispiel der Lehre der Erfindung. In dem weiteren Ausführungsbeispiel gemäß Fig. 5 bis 7 ist vorgesehen, dass am Pipettengehäuse 9 ein zusätzlicher Betätigungsschieber 26 zur Betätigung der Zylindergreifeinrichtung 11 angeordnet ist. Nach besonders bevorzugter Lehre ist dabei vorgesehen, dass der Betätigungsschieber 26 über die Antriebsarme 24 die Zylindergreifhebel 23 der Zylindergreifeinrichtung 11 symmetrisch öffnet.

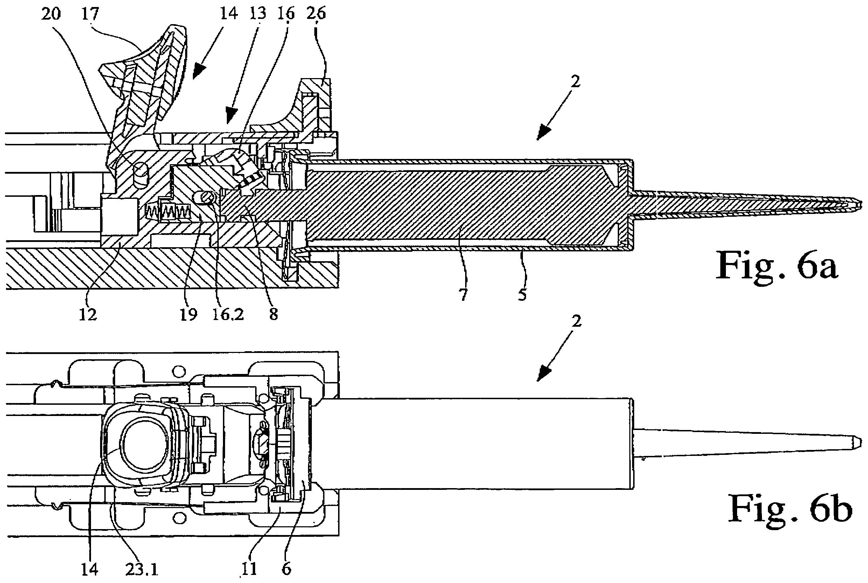

Die Steuerung des Kolbenkopfgreifers 16 erfolgt durch den Betätigungshebel 17 der Betätigungseinrichtung 14. Hier ist der Ablauf so wie beim ersten Ausführungsbeispiel, wenn man den Übergang von Fig. 5 nach Fig. 6 betrachtet. Insoweit kann auf die Ausführungen zum Ausführungsbeispiel von Fig. 2 und 3 verwiesen werden.

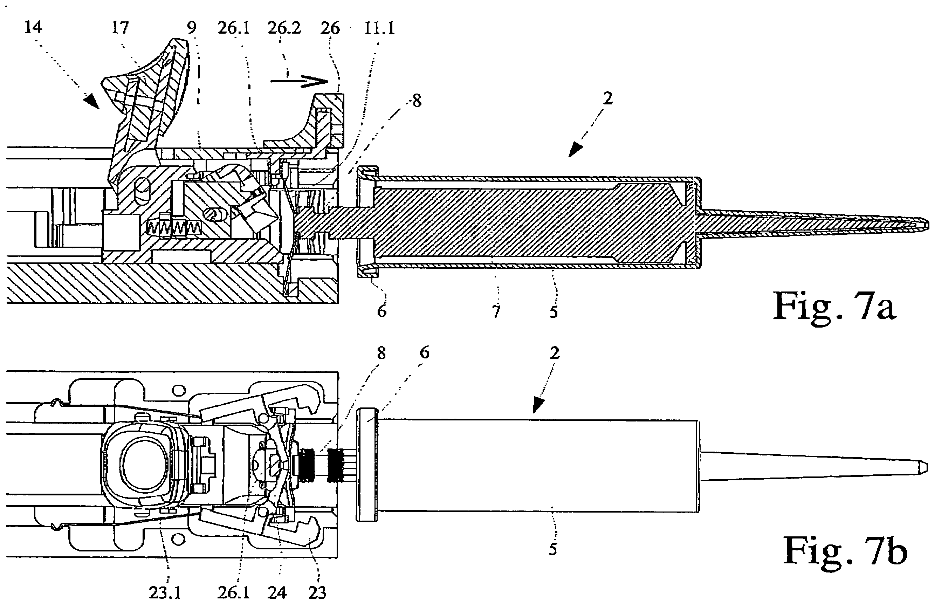

Im Übergang von Fig. 6 nach Fig. 7 erkennt man allerdings die andere Steuerungstechnik für die Zylindergreifhebel 23 der Zylindergreifeinrichtung. Dies wird jetzt durch den zusätzlichen Betätigungsschieber 26 übernommen, die Betätigungseinrichtung 14 hat insoweit keine zusätzliche Funktion. Am Betätigungsschieber 26 befindet sich ein Vorsprung 26.1, der an den Antriebsarmen 24 der Zylindergreifhebel 23 angreift und diese in Richtung der Spritze 2 drückt, so dass die Zylindergreifhebel 23 öffnen und den Befestigungsabschnitt 6 der Spritze 2 freigeben. Der Pfeil 26.2 in Fig. 7a deutet die Betätigungsrichtung für diese Betätigungsfunktion an.

Nicht dargestellt ist in der Zeichnung eine Variante, bei der die beiden Betätigungsmöglichkeiten für die Zylindergreifeinrichtung 11 der beiden Ausfühnmgsbeispiele von Fig. 2 bis Fig. 4 einerseits und Fig. 5 bis Fig. 7 andererseits miteinander verbunden werden. Das ist aber konstruktiv ebenfalls möglich.

## Patentansprüche

1. Pipette
- für ein Pipettensystem, das aus einer Pipette (1) und einer Spritze (2) besteht, bei dem die Spritze (2) einen Zylinder (5) mit einem vorzugsweise als Flansch ausgeführten Befestigungsabschnitt (6) und einen Kolben (7) mit einem auch bei vollständig in den Zylinder (5) eingeschobenem Kolben (7) aus dem Zylinder (5) endseitig herausragenden Kolbenkopf (8) aufweist,
mit einem Pipettengehäuse (9), das eine Längsachse (10) aufweist,
- wobei eine mit der Pipette (1) zu handhabende Spritze (2) mit ihrem Befestigungsabschnitt (6) und Kolbenkopf (8) in Richtung der Längsachse (10) des Pipettengehäuses (9), d. h. axial, in das Pipettengehäuse (9) einschiebbar und aus diesem entfernbar bzw. abwerfbar ist,
mit einer axial zugänglichen Öffnung (9.1) am Pipettengehäuse (9) für den Befestigungsabschnitt (6) einer Spritze (2),
mit einer axial zugänglichen, im Pipettengehäuse (9) ortsfest angebrachten Zylindergreifeinrichtung (11) für den Befestigungsabschnitt (6) einer Spritze (2),
mit einer im Pipettengehäuse (9) axial verschiebbaren Kolbenstelleinrichtung (12), mit einer axial zugänglichen, an der Kolbenstelleinrichtung (12) angebrachten, mit dieser axial verschiebbaren Kolbengreifeinrichtung (13) für den Kolbenkopf (8) einer Spritze (2) und
mit einer Betätigungseinrichtung (14) für die Kolbengreifeinrichtung (13),
wobei die Kolbengreifeinrichtung (13) durch Betätigen der Betätigungseinrichtung (14) aus einer Greifposition in eine Freigabeposition bringbar ist, in der der Kolbenkopf (8) einer Spritze (2) zur Entnahme oder Aufnahme freigegeben ist,
**dadurch gekennzeichnet,**
**dass** die Betätigungseinrichtung (14) für die Kolbengreifeinrichtung (13) an der Kolbenstelleinrichtung (12) angebracht und mit dieser axial verschiebbar ist.

2. Pipette nach Anspruch 1, **dadurch gekennzeichnet,**
**dass** die Kolbengreifeinrichtung (13) durch Betätigen der Betätigungseinrichtung (14) auch aus der Freigabeposition in die Greifposition bringbar ist,
**dass** die Kolbengreifeinrichtung (13) eine den Kolbenkopf (8) einer in das Pipettengehäuse (9) eingeschobenen Spritze (2) quer zur Längsachse (10) des Pipettengehäuses (9) radial abstützende Auflage (15) und einen verstellbaren Kolbenkopfgreifer (16) aufweist,
**dass** der Kolbenkopfgreifer (16) durch Betätigen der Betätigungseinrichtung (14) aus der den Kolbenkopf (8) freigebenden Freigabeposition in die den Kolbenkopf (8) an der Kolbenstelleinrichtung (12) fixierende Greifposition verstellbar ist und
**dass** der Kolbenkopfgreifer (16) mittels der Betätigungseinrichtung (14) in einer zumindest eine erhebliche radiale Komponente aufweisenden Verstellbewegung gegenüber der Auflage (15) verstellbar ist,
wobei, vorzugsweise, der Kolbenkopfgreifer (16) dazu an der Kolbenstelleinrichtung (12) schwenkbar gelagert ist.

3. Pipette nach Anspruch 2, **dadurch gekennzeichnet,**
**dass** die Kolbenstelleinrichtung (12) einen Anschlag (18) aufweist, der den Kolbenkopf (8) einer in das Pipettengehäuse (9) eingeschobenen Spritze (2) in einer zu der Abstützrichtung der Auflage (15) unterschiedlichen Richtung, vorzugsweise radial, entgegen der Verstellbewegung des Kolbenkopfgreifers (16) in die Freigabeposition abstützt.

4. Pipette nach einem der Ansprüche 1 bis 3, **dadurch gekennzeichnet,**
**dass** die Kolbenstelleinrichtung (12) ein axial einfederndes Druckstück (19) aufweist, an dem zum einen der Anschlag (18) und zum anderen eine axial ausgerichtete Anschlagfläche (19.3) angeordnet ist, die den Kolbenkopf (8) einer in das Pipettengehäuse (9) eingeschobenen Spritze (2) axial abstützt, wobei, vorzugsweise, das Druckstück (19) gegen den Kolbenkopf (8) der axial einzuschiebenden Spritze (2) axial vorgespannt ist und so ohne Spritze (2) eine vordere Position und mit einer eingeschobenen Spritze (2) eine hintere Position einnimmt und
das Druckstück (19) in seiner vorderen Position die Kolbengreifeinrichtung (13) blockiert, so dass der Kolbenkopfgreifer (16) nicht in die Greifposition verstellbar ist, und in der hinteren Position die Kolbengreifeinrichtung (13) freigibt, so dass der Kolbenkopfgreifer (16) in die Greifposition verstellbar ist.

5. Pipette nach Anspruch 2 und ggf. Anspruch 3 oder 4, **dadurch gekennzeichnet, dass** die Betätigungseinrichtung (14) derart an der Kolbenstelleinrichtung (12) angebracht ist, dass sie für die Verstellung des Kolbenkopfgreifers (16) aus der Greifposition in die Freigabeposition radial verschiebbar und optional zusätzlich um eine sowohl quer zur Längsachse (10) als auch quer zur Verschieberichtung verlaufende Schwenkachse (20) schwenkbar ist.

6. Pipette nach Anspruch 2 und ggf. einem der Ansprüche 3 bis 5, **dadurch gekennzeichnet,**
**dass** der Kolbenkopfgreifer (16) in der Greifposition den Kolbenkopf (8) einer eingeschobenen Spritze (2) mit vorzugsweise seitlich angeordneten Klemmbacken (21) ergreift und vorzugsweise seitlich klemmend und axial erhebliche Zugkräfte von der Kolbenstelleinrichtung (12) auf den Kolben (7) übertragend hält, wobei, vorzugsweise, die Klemmbacken (21) mit Profilierungen (22), insbesondere mit schneidenartigen Profilierungen und/oder mit Schneidenrollen versehen sind,
wobei, weiters vorzugsweise, die Profilierungen (22) bzw. die Schneidenrollen bei in der Greifposition befindlichem Kolbenkopfgreifer (16) ungleich zur Mittellinie des Kolbenkopfes (8) der Spritze (2) liegen.

7. Pipette nach Anspruch 2 und ggf. einem der Ansprüche 3 bis 6, **dadurch gekennzeichnet,**
**dass** die Auflage (15) und vorzugsweise auch der Anschlag (18) Einführschrägen (12.1; 19.2) aufweist, um das axiale Einschieben des Kolbenkopfes (8) der Spritze (2) zu erleichtern.

8. Pipette nach einem der Ansprüche 1 bis 7, **dadurch gekennzeichnet,**
**dass** die Zylindergreifeinrichtung (11) mindestens zwei im Pipettengehäuse (9) schwenkbar gelagerte Zylindergreifhebel (23) aufweist, die zum Befestigungsabschnitt (6) einer eingeschobenen Spritze (2) hin radial unter Federkraft angestellt sind und
**dass**, vorzugsweise, jeder Zylindergreifhebel (23) einen Antriebsarm (24) aufweist.

9. Pipette nach einem der Ansprüche 1 bis 8, **dadurch gekennzeichnet,**
**dass** mittels der Betätigungseinrichtung (14) auch die Zylindergreifeinrichtung (11) zwischen einer Greifposition und einer Freigabeposition verstellbar ist, wobei, vorzugsweise, die Betätigungseinrichtung (14) zum Verstellen des Kolbenkopfgreifers (16) aus der Greifposition in die Freigabeposition eine Schwenkbewegung nach vorne, d. h. in Richtung der Spritze (2) ausführt und zum Verstellen der Zylindergreifeinrichtung (11) aus der Greifposition in die Freigabeposition diese Schwenkbewegung nach vorne fortgesetzt wird.

10. Pipette nach den Ansprüchen 8 und 9, **dadurch gekennzeichnet,**
**dass** bei der Fortsetzung der Schwenkbewegung der Betätigungseinrichtung (14) die Zylindergreifhebel (23) der Zylindergreifeinrichtung (11) vom Befestigungsabschnitt (6) einer eingeschobenen Spritze (2) weg verstellt werden.

11. Pipette nach der Anspruch 9 oder 10, **dadurch gekennzeichnet,**
**dass** der Betätigungseinrichtung (14) ein Federelement (14.1) zugeordnet ist, das in Richtung der Schwenkbewegung zum Verstellen des Kolbenkopfgreifers (16) aus der Greifposition in die Freigabeposition wirkt,
wobei, vorzugsweise, das Federelement (14.1) bei der weiteren Schwenkbewegung zum Verstellen der Zylindergreifeinrichtung (11) unwirksam gemacht wird.

12. Pipette nach Anspruch 10 und ggf. Anspruch 11, **dadurch gekennzeichnet,**
**dass** die Betätigungseinrichtung (14) bei ihrer weiteren Schwenkbewegung einen Kraftübertragungszug (14.2) antreibt, der über die Antriebsarme (24) die Zylindergreifhebel (23) der Zylindergreifeinrichtung (11) symmetrisch öffnet.

13. Pipette nach Anspruch 12, **dadurch gekennzeichnet,**
**dass** die Pipette (1) eine Abdeckung (25) zum Verschließen einer Öffnung (9.2) im Pipettengehäuse (9) für die Betätigungseinrichtung (14) der Kolbenstelleinrichtung (12) aufweist und dass die Abdeckung (25) den Kraftübertragungszug (14.2) bildet.

14. Pipette nach Anspruch 8, **dadurch gekennzeichnet,**
**dass** am Pipettengehäuse (9) ein zusätzlicher Betätigungsschieber (26) zur Betätigung der Zylindergreifeinrichtung (11) angeordnet ist.

15. Pipette nach Anspruch 14, **dadurch gekennzeichnet,**
**dass** der Betätigungsschieber (26) über die Antriebsarme (24) die Zylindergreifhebel (23) der Zylindergreifeinrichtung (11) symmetrisch öffnet.

## Claims

1. Pipette
- for a pipette system, which consists of a pipette (1) and a syringe (2), where the syringe (2) has a cylinder (5) with a fastening portion (6) realized preferably as a flange and a plunger (7) with a plunger head (8) which projects out of the end of the cylinder (5) even when the plunger (7) has been completely inserted into the cylinder (5),
having a pipette housing (9) which has a longitudinal axis (10),
- wherein a syringe (2) to be handled with the pipette (1) is insertable with its fastening portion (6) and plunger head (8) into the pipette housing (9) and is removable or discardable from said pipette housing in the direction of the longitudinal axis (10) of the pipette housing (9), i.e. axially,
having an axially accessible opening (9.1) on the pipette housing (9) for the fastening portion (6) of the syringe (2),
having an axially accessible cylinder gripping device (11), mounted fixed in position in the pipette housing (9), for the fastening portion (6) of a syringe (2), having a plunger adjusting device (12) which is axially displaceable in the pipette housing (9),
having an axially accessible plunger gripping device (13) for the plunger head (8) of a syringe (2), said plunger gripping device being mounted on the plunger adjusting device (12) and being axially displaceable with said plunger adjusting device and
having an actuating device (14) for the plunger gripping device (13), wherein, by actuating the actuating device (14), the plunger gripping device (13) is movable from a grip position into a release position, in which the plunger head (8) of a syringe (2) is released for removal or picking up, **characterized in that**,
the actuating device (14) for the plunger gripping device (13) is mounted on the plunger adjusting device (12) and is axially displaceable with said plunger adjusting device.

2. Pipette according to Claim 1, **characterized in that** the plunger gripping device (13) is also movable out of the release position into the grip position by actuating the actuating device (14), **in that** the plunger gripping device (13) has a support (15), which radially supports the plunger head (8) of a syringe (2) inserted into the pipette housing (9) transversely in relation to the longitudinal axis (10) of the pipette housing (9), and an adjustable plunger head gripping means (16), **in that**, by actuating the actuating device (14), the plunger head gripping means (16) is adjustable from the release position, releasing the plunger head (8), into the grip position, fixing the plunger head (8) on the plunger adjusting device (12), and **in that**, by means of the actuating device (14), the plunger head gripping means (16) is adjustable in relation to the support (15) in an adjustment movement which has at least one considerable radial component, wherein the plunger head gripping means (16) is for this purpose, preferably, pivotably mounted on the plunger adjusting device (12).

3. Pipette according to Claim 2, **characterized in that** the plunger adjusting device (12) has a stop member (18), which supports the plunger head (8) of a syringe (2) inserted into the pipette housing (9) in a direction that differs from the supporting direction of the support (15), preferably radially, in opposition to the adjustment movement of the plunger head gripping means (16) into the release position.

4. Pipette according to one of Claims 1 to 3, **characterized in that** the plunger adjusting device (12) has an axially deflecting pressure piece (19), on which is arranged firstly the stop member (18) and secondly an axially aligned stopping face (19.3), which supports in an axial manner the plunger head (8) of a syringe (2) inserted into the pipette housing (9), wherein, preferably, the pressure piece (19) is axially pretensioned against the plunger head (8) of the syringe (2) to be axially inserted and thus assumes a front position without a syringe (2) and a rear position with an inserted syringe (2), and, in its front position, the pressure piece (19) blocks the plunger gripping device (13) such that the plunger head gripping means (16) is not adjustable into the grip position, and, in its rear position, said pressure piece releases the plunger gripping device (13) such that the plunger head gripping means (16) is adjustable into the grip position.

5. Pipette according to Claim 2 and, where applicable, Claim 3 or 4, **characterized in that** the actuating device (14) is mounted in such a manner on the plunger adjusting device (12) that it is radially adjustable for adjusting the plunger head gripping means (16) from the grip position into the release position and, as an additional option, is pivotable about a pivot axis (20) that extends both transversely in relation to the longitudinal axis (10) and transversely in relation to the direction of displacement.

6. Pipette according to Claim 2 and, where applicable, one of Claims 3 to 5, **characterized in that**, in the grip position, the plunger head gripping means (16) grips the plunger head (8) of an inserted syringe (2) with preferably laterally arranged clamping jaws (21) and holds it preferably in a laterally clamping manner, transmitting considerable tensile forces axially from the plunger adjusting device (12) to the plunger (7), wherein, preferably, the clamping jaws (21) are provided with profilings (22), in particular with cutting edge-like profilings and/or with cutting rollers, wherein, more preferably, with the plunger head gripping means (16) in the grip position, the profilings (22) or the cutting rollers lie unequally in relation to the centre line of the plunger head (8) of the syringe (2).

7. Pipette according to Claim 2 and, where applicable, one of Claims 3 to 6, **characterized in that** the support (15), and preferably also the stop member (18), has feed-in inclinations (12.1; 19.2) in order to facilitate the axial insertion of the plunger head (8) of the syringe (2).

8. Pipette according to one of Claims 1 to 7, **characterized in that** the cylinder gripping device (11) has at least two cylinder gripping levers (23), which are mounted so as to be pivotable in the pipette housing (9) and are set radially under spring force towards the fastening portion (6) of an inserted syringe (2), and **in that**, preferably, each cylinder gripping lever (23) has a driving arm (24).

9. Pipette according to one of Claims 1 to 8, **characterized in that** the cylinder gripping device (11) is also adjustable between a grip position and a release position by means of the actuating device (14), wherein, preferably, for adjusting the plunger head gripping means (16) from the grip position into the release position, the actuating device (14) carries out a pivoting movement forward, i.e. in the direction of the syringe (2), and for adjusting the cylinder gripping device (11) from the grip position into the release position said pivoting movement is continued forward.

10. Pipette according to Claims 8 and 9, **characterized in that** as the pivoting movement of the actuating device (14) is continued, the cylinder gripping levers (23) of the cylinder gripping device (11) are adjusted away from the fastening portion (6) of an inserted syringe (2).

11. Pipette according to Claim 9 or 10, **characterized in that** the actuating device (14) has associated therewith a spring element (14.1), which acts in the direction of the pivoting movement for adjusting the plunger head gripping means (16) from the grip position into the release position, wherein, preferably, as the pivoting movement continues for adjusting the cylinder gripping device (11), the spring element (14.1) is made ineffective.

12. Pipette according to Claim 10 and, where applicable, Claim 11, **characterized in that** the actuating device (14), as its pivoting movement continues, drives a force transmitting train (14.2), which, by means of the driving arms (24), opens the cylinder gripping levers (23) of the cylinder gripping device (11) in a symmetrical manner.

13. Pipette according to Claim 12, **characterized in that** the pipette (1) has a cover (25) for closing an opening (9.2) in the pipette housing (9) for the actuating device (14) of the plunger adjusting device (12) and **in that** the cover (25) forms the force transmitting train (14.2).

14. Pipette according to Claim 8, **characterized in that** an additional actuating slide (26) for actuating the cylinder gripping device (11) is arranged on the pipette housing (9).

15. Pipette according to Claim 14, **characterized in that** the actuating slide (26) opens the cylinder gripping levers (23) of the cylinder gripping device (11) in a symmetrical manner by means of the driving arms (24).

## Revendications

1. Pipette
- destinée à un système de pipetage constitué d'une pipette (1) et d'une seringue (2), dans laquelle la seringue (2) comporte un cylindre (5) muni d'une section de fixation (6) de préférence réalisée sous la forme d'une bride et un piston (7) muni d'une tête de piston (8) faisant également saillie par l'extrémité hors du cylindre (5) lorsque le piston (7) est entièrement inséré dans le cylindre (5),
comportant un boîtier de pipette (9) qui présente un axe longitudinal (10),
- dans lequel une seringue (2) devant être manipulée à l'aide de la pipette (1) peut être insérée au moyen de sa section de fixation (6) et de la tête de piston (8) dans la direction de l'axe longitudinal (10) du boîtier de pipette (9), c'est-à-dire axialement dans le boîtier de pipette (9) et en être retirée ou en être expulsée, comportant une ouverture (9.1) accessible axialement sur le boîtier de pipette (9) pour la section de fixation (6) d'une seringue (2),
comportant un dispositif de saisie de cylindre (11) accessible axialement et pouvant être monté en position fixe dans le boîtier de pipette (9), pour la section de fixation (6) d'une seringue (2),
comportant un dispositif de réglage de piston (12) pouvant être déplacé axialement dans le boîtier de pipette (9),
comportant un dispositif de saisie de piston (13) accessible axialement destiné à la tête de piston (8) d'une seringue (2), pouvant être monté sur le dispositif de réglage de piston (12) et pouvant être déplacé axialement avec celui-ci, et
comportant un dispositif d'actionnement (14) destiné au dispositif de saisie de piston (13),
dans lequel le dispositif de saisie de piston (13) peut être amené à passer d'une position de saisie à une position de libération à laquelle la tête de piston (8) d'une seringue (2) est libérée pour en être retirée ou y être reçue, par actionnement du dispositif d'actionnement (14),
**caractérisée en ce que** le dispositif d'actionnement (14) destiné au dispositif de saisie de piston (13) est monté sur le dispositif de réglage de piston (12) et peut être déplacé axialement avec celui-ci.

2. Pipette selon la revendication 1, **caractérisée en ce que** le dispositif de saisie de piston (13) peut également être amené à passer de la position de libération à la position de saisie par actionnement du dispositif d'actionnement (14),
**en ce que** le dispositif de saisie de piston (13) comporte un support (15) supportant radialement la tête de piston (8) d'une seringue (2) insérée dans le boîtier de pipette (9) transversalement à l'axe longitudinal (10) du boîtier de pipette (9) et un élément de saisie de tête de piston (16) réglable,
**en ce que** l'élément de saisie de tête de piston (16) peut être réglé par actionnement du dispositif d'actionnement (14) pour passer de la position de libération libérant la tête de piston (8) à la position de saisie fixant la tête de piston (8) sur le dispositif de réglage de piston (12), et
**en ce que** l'élément de saisie de tête de piston (16) peut être réglé au moyen du dispositif d'actionnement (14) de manière à effectuer un mouvement de réglage présentant au moins une composante radiale notable par rapport au support (15),
dans lequel l'élément de saisie de tête de piston (16) est à cet effet de préférence monté de manière pivotante sur le dispositif de réglage de piston (12).

3. Pipette selon la revendication 2,
**caractérisée en ce que** le dispositif de réglage de piston (12) comporte une butée (18) qui supporte la tête de piston (8) d'une seringue (2) insérée dans le boîtier de pipette (9) dans une direction différente de la direction de support du support (15), de préférence radialement et de manière opposée au mouvement de réglage de l'élément de saisie de tête de piston (16) à la position de libération.

4. Pipette selon l'une quelconque des revendications 1 à 3,
**caractérisée en ce que** le dispositif de réglage de piston (12) comporte une pièce de poussée (19) présentant un débattement élastique axial, sur laquelle sont disposées, d'une part, la butée (18), et d'autre part, une surface de butée orientée axialement (19.3), qui appuie axialement sur la tête de piston (8) d'une seringue (2) insérée dans le boîtier de pipette (9), dans laquelle la pièce de poussée (19) est précontrainte axialement contre la tête de piston (8) de la seringue (2) devant être insérée axialement, et se trouve de ce fait à une position avant en l'absence de seringue (2) et à une position arrière lorsqu'une seringue (2) est insérée, et
la pièce de poussée (19) bloque le dispositif de saisie de piston (13) à sa position avant de manière à ce que l'élément de saisie de piston (16) ne puisse pas être réglé à la position de saisie et à ce qu'il libère le dispositif de saisie de piston (13), à la position arrière, de manière à ce que l'élément de saisie de piston (16) puisse être réglé à la position de saisie.

5. Pipette selon la revendication 2 ou le cas échéant, selon la revendication 3 ou 4, **caractérisée en ce que** le dispositif d'actionnement (14) est monté sur le dispositif de réglage de piston (12) afin qu'il puisse être déplacé radialement pour faire passer l'élément de saisie de piston (16) de la position de saisie à la position de libération et qu'il puisse en outre être facultativement amené à pivoter autour d'un axe de pivotement (20), qui s'étend aussi bien transversalement à l'axe longitudinal (10) que transversalement à la direction de déplacement.

6. Pipette selon la revendication 2 et le cas échéant, selon l'une quelconque des revendications 3 à 5,
**caractérisée en ce que** l'élément de saisie de tête de piston (16), à la position de saisie, saisit la tête de piston (8) d'une seringue (2) insérée de préférence au moyen de mâchoires de serrage (21) disposées latéralement et maintient, de préférence par serrage latéral, et par transfert axial de forces de traction notables du dispositif de réglage de piston (12) au piston (7), dans lequel les mâchoires de serrage (21) sont de préférence dotées de profils (22), notamment tranchants et/ou de rouleaux de découpe,
dans lequel les profils (22) ou les rouleaux de découpe se situent de préférence à des positions irrégulières par rapport à la ligne médiane de la tête de piston (8) de la seringue (2) lorsque l'élément de saisie de tête de piston (16) se trouve à la position de saisie.

7. Pipette selon la revendication 2 et le cas échéant, selon l'une quelconque des revendications 3 à 6,
**caractérisée en ce que** le support (15), et de préférence, la butée (18), comportent des biseaux d'insertion (12.1 ; 19.2) facilitant l'insertion axiale de la tête de piston (8) de la seringue (2).

8. Pipette selon l'une quelconque des revendications 1 à 7,
**caractérisée en ce que** le dispositif de saisie de cylindre (11) comporte au moins deux leviers de saisie de cylindre (23) montés pivotants dans le boîtier de pipette (9), lesquels leviers sont engagés radialement sous l'effet d'une force de ressort vers la section de fixation (6) d'une seringue (2) insérée, et
**en ce que** chaque levier de saisie de cylindre (23) comporte de préférence un bras d'entraînement (24).

9. Pipette selon l'une quelconque des revendications 1 à 8,
**caractérisée en ce que** le dispositif de saisie de cylindre (11) peut également être réglé entre une position de saisie et une position de libération au moyen du dispositif d'actionnement (14), dans laquelle le dispositif d'actionnement (14) effectue un mouvement de pivotement vers l'avant, c'est-à-dire dans la direction de la seringue (2) pour faire passer l'élément de saisie de tête de piston (16) de la position de saisie à la position de libération, et ledit mouvement de pivotement est poursuivi vers l'avant pour faire passer le dispositif de saisie de cylindre (11) de la position de saisie à la position de libération.

10. Pipette selon les revendications 8 et 9,
**caractérisée en ce que**, lorsque le mouvement de pivotement du dispositif d'actionnement (14) est poursuivi, le levier de saisie de cylindre (23) est écarté du dispositif de saisie de cylindre (11) par la section de fixation (6) d'une seringue (2) insérée.

11. Pipette selon la revendication 9 ou 10,
**caractérisée en ce qu'**un élément à ressort (14.1) est associé au dispositif d'actionnement (14), lequel élément à ressort agit dans la direction du mouvement de pivotement pour faire passer l'élément de saisie de tête de piston (16) de la position de saisie à la position de libération,
dans laquelle l'élément à ressort (14.1) est rendu inactif lorsque le mouvement de pivotement est poursuivi pour régler le dispositif de saisie de cylindre (11).

12. Pipette selon la revendication 10 et le cas échéant, selon la revendication 11,
**caractérisée en ce que** le dispositif d'actionnement (14), lorsque son mouvement de pivotement est poursuivi, entraîne un train de transmission de force (14.2) qui ouvre symétriquement le levier de saisie de cylindre (23) du dispositif de saisie de cylindre (11) par l'intermédiaire des bras d'entraînement (24).

13. Pipette selon la revendication 12,
**caractérisée en ce que** la pipette (1) comporte un couvercle (25) permettant de refermer une ouverture (9.2) ménagée dans le boîtier de pipette (9) pour le dispositif d'actionnement (14) du dispositif de réglage de piston (12) et **en ce que** le couvercle (25) forme le train de transmission de force (14.2).

14. Pipette selon la revendication 8,
**caractérisée en ce qu'**un coulisseau d'actionnement (26) supplémentaire est disposé sur le boîtier de pipette (9) pour actionner le dispositif de saisie de cylindre (11).

15. Pipette selon la revendication 14,
**caractérisée en ce que** le coulisseau d'actionnement (26) ouvre symétriquement le levier de saisie de cylindre (23) du dispositif de saisie de cylindre (11) par l'intermédiaire des bras d'entraînement (24).
